# EUROPÄISCHE PATENTSCHRIFT

(11) **EP 2 298 643 B1**
(45) Veröffentlichungstag und Bekanntmachung des Hinweises auf die Patenterteilung: **21.10.2015**
(21) Anmeldenummer: 10008443.3
(22) Anmeldetag: 12.08.2010
(51) Int. Cl.: B64C 11/02, B64C 11/14, B64C 11/20

(54) **Antriebsrotor mit Luftkanal**
Drive rotor with air duct
Rotor d'entraînement doté d'un canal d'aération

(30) Priorität: 16.09.2009 DE 102009041667
(43) Veröffentlichungstag der Anmeldung: 23.03.2011
(73) Patentinhaber: Airbus Defence and Space GmbH, 85521 Ottobrunn (DE)
(72) Erfinder: van Toor, Dipl. Ing. Jan, 81739 München (DE)
(74) Vertreter: Rasch, Michael

(56) Entgegenhaltungen:
- DE-A1- 2 222 457
- FR-A- 648 107
- GB-A- 372 134
- US-A- 1 300 552
- US-A- 2 605 608

## Beschreibung

Die Erfindung betrifft einen Antriebsrotor mit einer Nabe und mehreren Rotorblättern gemäß dem Oberbegriff des Anspruchs 1. Derartige Antriebsrotoren werden hauptsächlich bei Luftfahrzeugen (Flugzeugen und Hubschraubern) als Antriebssystem benutzt, die von Gasturbinen oder Kolbenmotoren angetrieben werden.

Die GB 372 134 A offenbart einen Antriebsrotor mit den Merkmalen das Oberbegriffs von Anspruch 1.

Die FR 648 107 A offenbart einen Antriebsrotor mit Rotorströmungskanälen mit radial zunehmendem Quernitt, an deren Enden jeweils mehrere Umlenkschaufeln angordnet sind zur Luftstromumlenkung in Umfangsrichtung zu jeweils einem Luftauslass.

Aufgabe der vorliegenden Erfindung ist es, den Wirkungsgrad eines Antriebsrotors zu erhöhen, also insbesondere die erforderliche Antriebsleistung zu reduzieren.

Erfindungsgemäß wird diese Aufgabe durch die im Patentanspruch 1 angegebenen Merkmale gelöst. Vorteilhafte Weiterbildungen des Erfindungsgedankens ergeben sich aus den Unteransprüchen.

Die Grundidee der Erfindung besteht darin, einen Strömungskanal in der Rotornabe und in mindestens zwei gegenüberliegenden Rotorblättern vorzusehen, der eine Druck- und Temperaturreduzierung der durchströmenden Luft bewirkt, wobei die Luft vor dem Austritt an den Rotorblatthinterkanten dort vorgesehene Umlenkschaufeln Kräfte ausüben, die ein Drehmoment bewirken, das größer ist als das zur Luftbeförderung im Strömungskanal aufgewendete Drehmoment.

Dazu tritt die Luft durch den Lufteinlass in der Nabe ein. In einem spiralförmigen Nabenströmungskanal mit einem in Strömungsrichtung abnehmenden Krümmungsradius erhöht sich die Strömungsgeschwindigkeit der durchströmenden Luft, während gleichzeitig der Druck und die Lufttemperatur fallen. Durch den in Strömungsrichtung abnehmenden Nabenströmungskanalquerschnitt wird die Beschleunigung des Luftstroms verstärkt. Mithin ist der statische Druck am Ende des Nabenströmungskanals geringer als am Lufteinlass, wodurch ein Sog erzeugt wird, der die angesaugte Luftmenge erhöht. Der Nabenströmungskanal endet etwa in der Drehebene der Rotorblätter und geht über in mindestens zwei radial verlaufende Rotorströmungskanäle, die in mindestens zwei sich gegenüberliegenden Rotorblättern vorgesehen sind. Der Strömungsquerschnitt in den Rotorströmungskanälen erweitert sich dabei in radialer Richtung. Durch die Drehung der Rotorblätter wird auf die Luft in den Rotorströmungskanälen eine Zentrifugalkraft ausgeübt, welche die Luftströmung nach radial außen beschleunigt. Diese Beschleunigung und der durch den sich erweiternden Strömungskanal expandierende Luftstrom bewirken eine weitere Abkühlung des Luftstroms, wodurch aufgrund der Abnahme des Luftvolumens ein weiterer unterstützender Unterdruck erzeugt wird.

Durch die Umlenkung des Luftstroms an den Umlenkschaufeln wird eine Kraft bzw. ein Drehmoment erzeugt, welches größer ist als das Drehmoment, welches zur Luftbeförderung durch die Kanäle erforderlich ist. Dadurch lässt sich der Antriebswirkungsgrad verbessern bzw. der Treibstoffverbrauch reduzieren bzw. das erforderliche Antriebsaggregat verkleinern.

Gemäß einer bevorzugten Weiterbildung der Erfindung sind die Umlenkschaufeln in der Nähe der jeweilige Rotorblattspitzen angeordnet, um eine möglichst optimale Ausnutzung des Strömungseffekts zu erreichen.

Vorzugsweise hat die Änderung des Nabenströmungskanalquerschnitts die Form eines hyperbolischen Kegels, wodurch die Luftbeschleunigung bzw. die Druckreduzierung am wirksamsten ist.

Erfindungsgemäß sind mindestens zwei gegenüberliegende Rotorblätter mit je einem Rotorströmungskanal versehen. Bei einem Rotor mit drei oder mehr Rotorblättern ist es am zweckmäßigsten, wenn jedes Rotorblatt einen Rotorströmungskanal aufweist, die alle vom Nabenströmungskanal abzweigen.

Die Erfindung eignet sich insbesondere für Antriebsrotoren, die als Propellerantriebe von Flugzeugen verwendet werden. Dazu ist der Antriebsrotor mit einer Gasturbine oder einem Kolbenmotor verbunden. Alternativ ist auch die Verwendung als Fan in einem Fantriebwerk möglich. Eine weitere bevorzugte Anwendung ist die Verwendung des Antriebsrotors als Hauptrotor eines Hubschraubers.

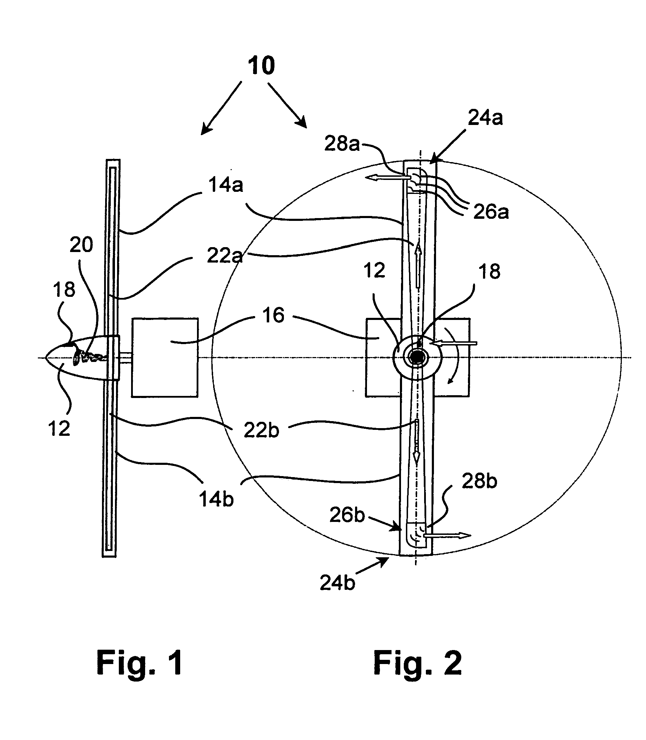

Die Erfindung wird nachfolgend anhand zweier Zeichnungen näher erläutert. Dabei zeigt
- Fig. 1:: einen schematischen Axialschnitt durch einen Antriebsrotor;
- Fig. 2:: einen schematischen Querschnitt durch den Antriebsrotor in der Ebene der sich drehenden Rotorblätter.

Der in beiden Figuren dargestellte Antriebsrotor **10** umfasst eine Rotornabe **12** und zwei Rotorblätter **14a, 14b**. Der Rotor **12** wird mittels eines nicht näher dargestellten Motors **16** angetrieben. Dabei kann es sich um einen Kolbenmotor, eine Gasturbine oder ein sonstiges Antriebsaggregat handeln.

In der Rotornabe **12** befindet sich ein schaufelartiger Lufteinlass **18**, der in den Nabenströmungskanal **20** übergeht. Dieser Nabenströmungskanal **20** hat einen spiralförmigen Verlauf, wobei der Krümmungsradius in Strömungsrichtung bzw. zur Rotorblattebene hin abnimmt. Gleichzeitig nimmt auch der Strömungskanalquerschnitt in dieser Richtung ab. Der Nabenströmungskanal **20** verzweigt sich in zwei radial sich erstreckende Rotorströmungskanäle **22a, 22b**, die im Inneren der Rotorblätter **14a, 14b** angeordnet sind und bis kurz vor die Rotorspitzen reichen. Die Rotorströmungskanäle **22a, 22b** haben in radialer Richtung einen sich erweiternden Querschnitt und münden in Umlenkbereiche **24a, 24b**, die eine Anzahl Umlenkschaufeln **26a, 26b** enthalten. Stromab der Umlenkschaufel **26a, 26b** sind im Bereich der Rotorblatthinterkanten Luftauslässe **28a, 28b** vorgesehen.

Im Betrieb wird durch die vom Antriebsrotor **16** erzeugte Drehbewegung Luft in den Lufteinlass **18** gesogen, im Nabenströmungskanal **20** beschleunigt wobei gleichzeitig Druck und Temperatur abfallen. Am Ende des Nabenströmungskanals **20** verzweigt sich der Luftstrom in die beiden radialen, sich im Querschnitt erweiternden Rotorströmungskanäle **22a, 22b.** Die beiden Luftströme werden durch die Umlenkschaufeln **26a, 26b** in Umfangsrichtung, also etwa um 90° abgelenkt, wodurch ein nutzbares Drehmoment erzeugt wird. Die Luft tritt dann über die Luftauslässe **28a, 28b** an den Rotorblatthinterkanten aus.

## Patentansprüche

1. Antriebsrotor (10) mit einer Rotornabe (12) und mehreren Rotorblättern (14a, 14b), wobei in der Rotornabe (12) ein der anströmenden Luft zugewandter Lufteinlass (18) vorgesehen ist, dem sich ein spiralförmiger Nabenströmungskanal (20) anschliesst, der in mindestens zwei gleichartige Öffnungen übergeht, **dadurch gekennzeichnet, dass** der Nabenströmungskanal (20) in Strömungsrichtung abnehmenden Krümmungsradius und Nabenströmungskanalquerschnitt aufweist, und dass der Nabenströmungskanal (20) in sich in den Rotorblättern (14a, 14b) erstreckende Rotorströmungskanäle (22a, 22b) mit radial zunehmendem Querschnitt übergeht, an deren Enden jeweils mehrere Umlenkschaufeln (26a, 26b) angeordnet sind zur Luftstromumlenkung in Umfangsrichtung zu jeweils einem Luftauslass (28a, 28b) an den Rotorblatthinterkanten.

2. Antriebsrotor nach Anspruch 1, **dadurch gekennzeichnet, dass** die Umlenkschaufeln (26a, 26b) in der Nähe der jeweiligen Rotorblattspitzen angeordnet sind.

3. Antriebsrotor nach Anspruch 1, **dadurch gekennzeichnet, dass** der Nabenströmungskanalquerschnitt den Verlauf eines hyperbolischen Kegels aufweist.

4. Antriebsrotor nach Anspruch 1, **dadurch gekennzeichnet, dass** jedes Rotorblatt (14) einen Rotorströmungskanal (22) aufweist.

5. Antriebsrotor nach einem der Ansprüche 1 bis 4, **dadurch gekennzeichnet, dass** dieser Bestandteil des Propellerantriebs eines Flugzeugs ist.

6. Antriebsrotor nach einem der Ansprüche 1 bis 4, **dadurch gekennzeichnet, dass** dieser der Hauptrotor eines Hubschraubers ist.

## Claims

1. A drive rotor (10) with a rotor hub (12) and several rotor blades (14a, 14b), wherein an air inlet (18) that faces the inflowing air is provided in the rotor hub (12) and followed by a spiral-shaped hub flow channel (20) that transforms into at least two identical openings, **characterized in that** the hub flow channel (20) has a decreasing curvature radius and hub flow channel cross section in the flow direction, and **in that** the hub flow channel (20) transforms into rotor flow channels (22a, 22b) that extend in the rotor blades (14a, 14b) and have a radially increasing cross section, wherein several turning vanes (26a, 26b) are respectively arranged on the ends of said rotor flow channels in order to deflect the air flow in the circumferential direction to a respective air outlet (28a, 28b) on the trailing rotor blade edges.

2. The drive rotor according to claim 1, **characterized in that** the turning vanes (26a, 26b) are arranged in the vicinity of the respective rotor blade tips.

3. The drive rotor according to claim 1, **characterized in that** the hub flow channel cross section progresses in the shape of a hyperbolic cone.

4. The drive rotor according to claim 1, **characterized in that** each rotor blade (14) features a rotor flow channel (22).

5. The drive rotor according to one of claims 1 to 4, **characterized in that** it forms part of a propeller drive of an aircraft.

6. The drive rotor according to one of claims 1 to 4, **characterized in that** it forms the main rotor of a helicopter.

## Revendications

1. Rotor d'entraînement (10) avec un moyeu de rotor (12) et plusieurs pales de rotor (14a, 14b), dans le moyeu de rotor (12) étant prévue une entrée d'air (18) dirigée vers l'air affluant, sur laquelle se raccorde un canal d'écoulement (20) du moyeu de forme spiroïdale qui passe dans au moins deux orifices de type identique, **caractérisé en ce que** le canal d'écoulement (20) du moyeu présente un rayon de courbure décroissant dans la direction d'écoulement et une section transversale de canal d'écoulement du moyeu et **en ce que** le canal d'écoulement (20) du moyeu passe dans des canaux d'écoulement (22a, 22b) du rotor s'étendant dans les pales de rotor (14a, 14b) avec une section transversale croissante en direction radiale, sur les extrémités desquels sont placées chaque fois plusieurs aubes déflectrices (26a, 26b) pour renvoyer le flux d'air en direction périphérique vers chaque fois une sortie d'air (28a, 28b) sur les arêtes postérieures des pales du rotor.

2. Rotor d'entraînement selon la revendication 1, **caractérisé en ce que** les aubes déflectrices (26a, 26b) sont placées à proximité des pointes respectives des pales de rotor.

3. Rotor d'entraînement selon la revendication 1, **caractérisé en ce que** la section transversale du canal d'écoulement de moyeu présente le tracé d'un cône hyperbolique

4. Rotor d'entraînement selon la revendication 1, **caractérisé en ce que** chaque pale de rotor (14) comporte un canal d'écoulement (22) de rotor.

5. Rotor d'entraînement selon l'une quelconque des revendications 1 à 4, **caractérisé en ce qu'**il est un élément d'entraînement de l'hélice d'un avion.

6. Rotor d'entraînement selon l'une quelconque des revendications 1 à 4, **caractérisé en ce qu'**il est le rotor principal d'un hélicoptère.
